# EUROPEAN PATENT SPECIFICATION

(11) **EP 2 879 216 B1**
(45) Date of publication and mention of the grant of the patent: **27.02.2019**
(21) Application number: 14828431.8
(22) Date of filing: 16.09.2014
(51) Int. Cl.: H01M 4/587, H01M 4/38, H01M 4/36, H01M 10/052, H01M 4/62

(54) **POROUS SILICON-BASED ANODE ACTIVE MATERIAL, AND LITHIUM SECONDARY BATTERY CONTAINING SAME**
PORÖSES SILICIUMBASIERTES AKTIVES ANODENMATERIAL UND LITHIUMSEKUNDÄRBATTERIE DAMIT
MATÉRIAU ACTIF D'ANODE À BASE DE SILICIUM POREUX ET ACCUMULATEUR AU LITHIUM LE CONTENANT

(30) Priority: 17.09.2013 KR 20130111981
(43) Date of publication of application: 03.06.2015
(73) Proprietor: LG Chem, Ltd., Seoul 150-721 (KR)
(72) Inventor: LEE, Mi Rim, Daejeon 305-738 (KR); KIM, Hyun Chul, Daejeon 305-738 (KR); KIM, Eun Kyung, Daejeon 305-738 (KR); LEE, Yong Ju, Daejeon 305-738 (KR); YOO, Jung Woo, Daejeon 305-738 (KR)
(74) Representative: Hoffmann Eitle
(86) International application number: PCT/KR2014/008624
(87) International publication number: WO 2015/041450

(56) References cited:
- WO-A1-2013/114094
- WO-A2-2011/056847
- WO-A2-2013/128201
- JP-B2- 3 816 799
- KR-A- 20090 109 225
- KR-A- 20120 010 211
- KR-A- 20130 016 727
- J.H. LEE ET AL.: 'Spherical silicon/graphite/carbon composites as anode material for lithium- ion batteries.' JOURNAL OF POWER SOURCES vol. 176, 2008, pages 353 - 358, XP022397050
- Showa Denko: "VAPOR GROWN CARBON FIBER T Y P I C A L", , 15 November 2016 (2016-11-15), XP055319514, Retrieved from the Internet: URL:http://www.sdkc.com/documents/VGCF-H.p df [retrieved on 2016-11-15]
- Shimadzu: "Measurement of Needle-Shaped, Fiber-Shaped and Tubular Particles Figure 3: Particle Size Distribution in Measurement of Needle-Shaped, Fiber-Shaped and Tubular Particles", , 3 November 2009 (2009-11-03), XP055446213, Retrieved from the Internet: URL:https://www.ssi.shimadzu.com/products/ literature/testing/needlefibertubular%20re d.pdf [retrieved on 2018-01-30]
- KIM H ET AL: "Three-dimensional porous silicon particles for use in high-performance lithium secondary batteries", ANGEWANDTE CHEMIE INTERNATIONAL EDITION, VERLAG CHEMIE, vol. 47, no. 52, 31 December 2008 (2008-12-31), pages 10151-10154, XP002739635, ISSN: 1433-7851, DOI: 10.1002/ANIE.200804355 [retrieved on 2008-11-17]

## Description

### TECHNICAL FIELD

The present invention relates to a porous silicon-based active material for negative electrode, and more particularly, to a porous silicon-based active material for negative electrode including porous silicon-based particles as well as fine carbon particles and coarse carbon particles respectively having different average particle diameters, and a lithium secondary battery including the porous silicon-based active material for negative electrode.

### BACKGROUND ART

Recently, in line with miniaturization, lightweight, thin profile, and portable trends in electronic devices according to the development of information and telecommunications industry, the need for high energy density batteries used as power sources of such electronic devices has increased. Currently, research into lithium secondary batteries, as batteries that may best satisfy the above need, has actively conducted.

Various types of carbon-based materials including artificial graphite, natural graphite, or hard carbon, which are capable of intercalating/deintercalating lithium, have been used as active materials for negative electrode of lithium secondary batteries. For example, WO 2013/114094 describes a composition comprising at least 50 wt.% of a first particulate electroactive material and 3-15 wt.% of a carbon additives mixture comprising carbon black and first and second elongate carbon nanostructures (e.g. vapor grown carbon fibers (VGCF) and multiwalled carbon nanotubes (MWCNT)). Also, WO 2013/128201 A2 describes an electrode mix in Example 3b comprising spherical synthetic graphite, VGCF of unknown length, silicon particle and a binder. Among the carbon-based materials, since graphite provides advantages in terms of energy density of a lithium battery and also guarantees long lifespan of the lithium secondary battery due to excellent reversibility, graphite has been most widely used.

However, since graphite may have a low capacity in terms of energy density per unit volume of an electrode and may facilitate side reactions with an organic electrolyte at a high discharge voltage, there is a risk of fire or explosion due to malfunction and overcharge of the battery.

Thus, metal-based active materials for negative electrode, such as silicon (Si), have been studied. It is known that a Si metal-based active material for negative electrode exhibits a high lithium capacity of about 4,200 mAh/g. However, the Si metal-based active material for negative electrode may cause a maximum volume change of 300% or more before and after the reaction with lithium, i.e., during charge and discharge. As a result, conductive networks in the electrode are damaged and contact resistance between particles is increased. Thus, there is a phenomenon in which a battery performance degrades.

Thus, an electrode has been studied in which the conductivity of a silicon-based active material for negative electrode is improved by surrounding the silicon-based active material for negative electrode with graphite-based particles.

However, with respect to the above active material for negative electrode, the performance of the battery may degrade while the contact between the graphite-based particles and the silicon-based particles is deteriorated due to the maximum volume change of 300% or more in the silicon-based active material for negative electrode during the charge and discharge. In particular, with respect to a porous silicon-based active material for negative electrode, since the short circuit between porous silicon-based particles and graphite particles may frequently occur due to a porous structure of the surfaces of the porous silicon-based particles, the battery performance may be reduced.

### DISCLOSURE OF THE INVENTION

### TECHNICAL PROBLEM

The present invention is provided to solve technical problems of the related art.

The present invention provides an active material for negative electrode which may improve lifetime characteristic of a secondary battery by addressing the typical short circuit problem and deterioration of the contact between active materials for negative electrode during charge and discharge cycles while using a mixed active material for negative electrode of porous silicon-based particles and carbon particles.

The present invention also provides a negative electrode and a lithium secondary battery including the active material for negative electrode.

### TECHNICAL SOLUTION

According to an aspect of the present invention, there is provided an active material for negative electrode according to claim 1 including: porous silicon-based particle; and carbon particles, wherein the carbon particles include fine carbon particles and coarse carbon particles respectively having different average particle diameters.

According to another aspect of the present invention, there is provided a negative electrode including the active material for negative electrode.

According to another aspect of the present invention, there is provided a lithium secondary battery including the negative electrode.

### ADVANTAGEOUS EFFECTS

Since an active material for negative electrode according to an embodiment of the present invention includes porous silicon-based particles as well as fine and coarse carbon particles respectively having different average particle diameters, the contact between the porous silicon-based particles and the carbon particles may be increased. As a result, lifetime characteristics of a lithium secondary battery may be further improved.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIGS. 1A and 1B are schematic views illustrating a typical negative electrode (FIG. 1A) and the negative electrode (FIG. 1B) during charge and discharge; and

FIGS. 2A and 2B are schematic views illustrating a negative electrode (FIG. 2A) according to an embodiment of the present invention and the negative electrode (FIG. 2B) during charge and discharge.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

An active material for negative electrode according to an embodiment of the present invention includes porous silicon-based particles; and carbon particles, wherein the carbon particles include fine carbon particles and coarse carbon particles respectively having different average particle diameters.

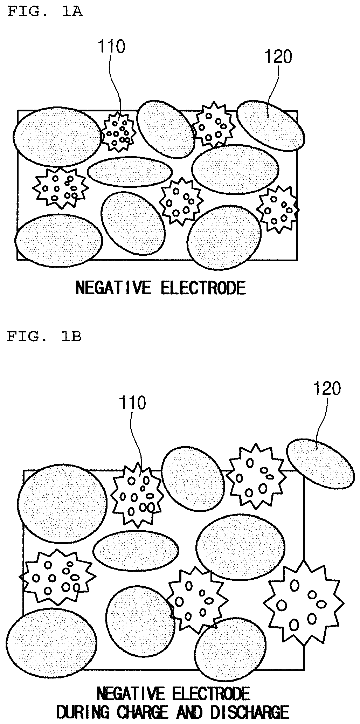

FIGS. 1A and 1B are schematic views illustrating a typical negative electrode (FIG. 1A) and the negative electrode (FIG. 1B) during charge and discharge.

In general, an active material for negative electrode including porous silicon-based particles may have low conductivity. Thus, as illustrated in FIGS. 1A and 1B, a method of improving conductivity by mixing silicon-based particles 110 and carbon particles 120 has been studied. However, as illustrated in FIG. 1B, since the contact between the silicon-based particles and the carbon particles may be deteriorated due to volume changes in the silicon-based particles during the charge and discharge, a short circuit may frequently occur.

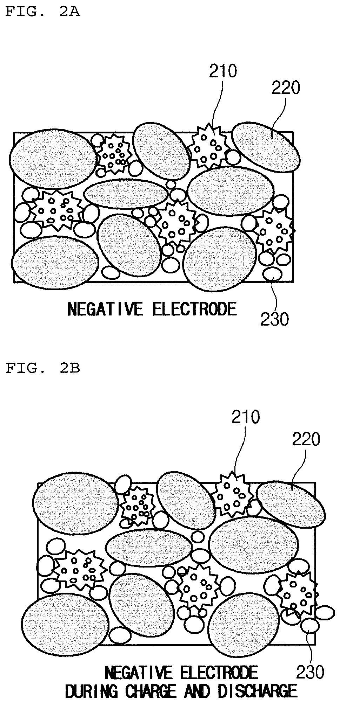

Thus, as illustrated in FIGS. 2A and 2B, since porous silicon-based particles 210 as well as fine carbon particles 230 and coarse carbon particles 220 respectively having different average particle diameters are included in the present invention, the contact between the porous silicon-based particles and the carbon particles may be increased to prevent a short circuit. As a result, lifetime characteristics of a lithium secondary battery may be further improved.

According to the present invention, the average particle diameter (D₅₀) of the fine carbon particles is in the range of 1 µm to 5 µm.

In the case that the average particle diameter of the fine carbon particles is within the above range according to the embodiment of the present invention, the fine carbon particles may be uniformly formed between the porous silicon-based particles and the coarse carbon particles. Thus, the short circuit problem due to the volume expansion during the charge and discharge may be addressed by improving the contact between the porous silicon-based particles and the carbon particles during charge and discharge cycles.

Also, according to the present invention, the average particle diameter (D₅₀) of the coarse carbon particles is in a range of 10 µm to 30 µm, and more specifically, may be in a range of 10 µm to 20 µm.

In the case that the average particle diameter of the coarse carbon particles is less than 10 µm, since the difference between the average particle diameters of the coarse carbon particles and the fine carbon particles is small, an effect of improving the conductivity due to the mixing of two kinds of carbon particles may be insignificant. In the case in which the average particle diameter of the coarse carbon particles is greater than 30 µm, rate controlling properties may be deteriorated due to the excessively large particle diameter of the coarse carbon particles and capacity of an electrode in an optimum density may be reduced.

An average particle diameter (D₅₀) of the porous silicon-based particles according to an embodiment of the present invention is in a range of 1 µm to 20 µm, may be in a range of 3 µm to 12 µm, and more specifically, may be in a range of 5 µm to 10 µm.

In the case that the average particle diameter of the porous silicon-based particles is less than 1 µm, the porous silicon-based particles may be difficult to be dispersed in an active material for negative electrode slurry. In the case in which the average particle diameter of the porous silicon-based particles is greater than 20 µm, since the expansion of the particles due to the charge of lithium ions may become severe, adhesion between particles and adhesion between particles and current collector may decrease as the charge and discharge are repeated. Thus, the lifetime characteristics may be significantly reduced.

In the present invention, the average particle diameter of the particles is defined as a particle diameter at 50% in a cumulative particle diameter distribution. The average particle diameter (D₅₀) of the particles according to the the present invention is measured by using a laser diffraction method. The laser diffraction method may generally measure a particle diameter ranging from a submicron level to a few mm, and may obtain highly repeatable and high resolution results.

In the active material for negative electrode according to the embodiment of the present invention, the fine carbon particles may be included in an amount of 1 wt% to 30 wt%, more specifically, 10 wt% to 20 wt%, based on a total weight of the carbon particles. In the case that the amount of the fine carbon particles is less than 1 wt%, an effect of preventing the short circuit between the porous silicon-based particles and the carbon particles and an effect of improving the lifetime characteristics of the secondary battery, which are desired in the present invention, may be insignificant. In contrast, in the case in which the amount of the fine carbon particles is greater than 30 wt%, a specific surface area may be increased due to the excessive amount of the fine carbon particles and as a result, side reactions may increase and the lifetime characteristics may be degraded.

In the active material for negative electrode according to the embodiment of the present invention, the coarse carbon particles may be included in an amount of 70 wt% to 99 wt%, more specifically, 80 wt% to 90 wt%, based on the total weight of the carbon particles. In the case that the amount of the coarse carbon particles is within the above range, the conductivity of the porous silicon-based active material for negative electrode may be sufficiently improved.

In the case that the amount of the coarse carbon particles is less than 70 wt%, the specific surface area may be increased due to the excessive amount of the fine carbon particles, and as a result, the side reactions may increase and the lifetime characteristics may be degraded. In contrast, in the case in which the amount of the coarse carbon particles is greater than 99 wt%, since the amount of the mixed fine carbon particles is excessively low, the effect of preventing the short circuit between the porous silicon-based particles and the carbon particles and the effect of improving the lifetime characteristics of the secondary battery, which are desired in the present invention, may be insignificant.

According to an embodiment of the present invention, the porous silicon-based particles and the carbon particles may be mixed together or may be composited, and specifically, the porous silicon-based particles, the fine carbon particles, and the coarse carbon particles may be uniformly mixed or may be composited by mechanical milling. In the mechanical milling, for example, a typical milling device, such as a high-energy ball mill, a planetary mill, a stirred ball mill, or a vibrating mill, or milling method may be used to uniformly mix or composite these particles.

According to an embodiment of the present invention, a mixing ratio of the fine carbon particles to the coarse carbon particles may be in a range of 1:4 to 1:9 as a weight ratio.

A mixing ratio of the porous silicon-based particles to the carbon particles including the fine and coarse carbon particles may be in a range of 1:1 to 1:20 as a weight ratio.

In the case that the amount of the carbon particles is less than the above mixing ratio, the effect of the active material for negative electrode for improving the electrical conductivity may be insignificant. In the case in which the amount of the carbon particles is greater than the above mixing ratio, since the amount of silicon may be reduced, high capacity may be difficult to be obtained.

According to an embodiment of the present invention, the porous silicon-based particles may be porous SiOₓ (where 0≤x<2) or a porous silicon-based compound of Chemical Formula 1, and more specifically, may be porous silicon (Si) particles.

<Chemical Formula 1> M_{y}Si

where M includes any one element selected from the group consisting of scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), ruthenium (Ru), rhodium (Rh), palladium (Pd), lanthanum (La), hafnium (Hf), tantalum (Ta), tungsten (W), rhenium (Re), osmium (Os), magnesium (Mg), calcium (Ca), boron (B), phosphorous (P), aluminum (Al), germanium (Ge), tin (Sn), antimony (Sb), bismuth (Bi), and lithium (Li), or two or more elements thereof, and
y is between 0.001 and 0.4.

According to an embodiment of the present invention, in order to achieve a desirable performance of a negative electrode, an average pore diameter of the porous silicon-based particles is in a range of 30 nm to 500 nm as measured on the surface thereof. The average pore diameter is measured using scanning electron microscope (SEM) images.

In the case that the average pore diameter is less than 30 nm, an effect of suppressing the volume expansion of the active material for negative electrode during charge and discharge may be insignificant. In the case in which the average pore diameter is greater than 500 nm, since mechanical strength may decrease due to the large amount of pores present in the active material for negative electrode, the active material for negative electrode may be fractured during battery manufacturing processes such as mixing of slurry and rolling after coating.

A specific surface area (BET-SSA) of the porous silicon-based particles may be in a range of 5 m²/g to 50 m²/g. In the case that the specific surface area of the porous silicon-based particles is less than 5 m²/g, since pores may not be sufficiently formed, the effect of improving the contact to the carbon particles may be insignificant. In the case in which the specific surface area is greater than 50 m²/g, side reactions with an electrolyte may be difficult to be reduced due to the large specific surface area.

According to an embodiment of the present invention, the specific surface area of the porous silicon-based particles is measured by a Brunauer-Emmett-Teller (BET) method. The specific surface area is measured by a 6-point BET method according to a nitrogen gas adsorption-flow method using a porosimetry analyzer (Belsorp-II mini by Bell Japan Inc.).

Also, according to the present invention, the carbon particles may include any one selected from the group consisting of artificial graphite, natural graphite, mesocarbon, amorphous hard carbon, low-crystalline soft carbon, carbon black, acetylene black, Ketjen black, super P, graphene, fibrous carbon, and surface-coated graphite, or a mixture of two or more thereof.

According to an embodiment of the present invention, the fine carbon particles and the coarse carbon particles may be the same or different from each other.

The shape of the fine carbon particles, for example, may be spherical, rectangular, scaly, planar, point-like, or a mixed shape thereof, and more preferably, may be spherical, point-like, scaly, or a mixed shape thereof. The shape of the coarse carbon particles is spherical.

A method of preparing an active material for negative electrode according to an embodiment of the present invention may include the steps of: (i) preparing porous silicon-based particles; and (ii) mixing the porous silicon-based particles with fine and coarse carbon particles respectively having different average particle diameters.

A typical method of preparing porous silicon-based particles known in the art may be used as a method of preparing the porous silicon-based particles.

Specifically, the method of preparing the porous silicon-based particles, for example, may include the steps of: (i) mixing a fluorinated solution and a metal precursor solution and then introducing silicon-based particles into the mixed solution to electrodeposit metal particles on surfaces of the silicon-based particles; (ii) etching by contacting the silicon-based particles having metal particles electrodeposited thereon with an etching solution; and (iii) removing the metal particles by contacting the etched silicon-based particles with a metal removal solution.

According to an embodiment of the present invention, in step (i), metal particles may be electrodeposited on the surfaces of silicon-based particles by mixing a fluorinated solution and a metal precursor solution and then introducing the silicon-based particles into the mixed solution.

In this case, the silicon-based particles emit electrons due to the fluorinated solution, and metal ions in the solution receive electrons to be reduced and electrodeposited on the surfaces of the silicon-based particles. Once the metal particles are electrodeposited on the surfaces of the silicon-based particles, continuous electrodeposition may occur as the metal particle itself becomes a catalyst site.

The fluorinated solution used may include at least one selected from the group consisting of hydrogen fluoride (HF), fluorosilicic acid, and ammonium fluoride (NH₄F), and the metal precursor solution may include at least one selected from the group consisting of silver (Ag), gold (Au), platinum (Pt), and Cu.

According to an embodiment of the present invention, the fluorinated solution and the metal precursor solution may be mixed at a weight ratio ranging from 10:90 to 90:10. In the case that the fluorinated solution is mixed in a weight ratio of less than 10, since an amount of the metal particles electrodeposited on the surfaces of the silicon-based particles may be small and a reaction rate may be very slow, a preparation time may increase. Also, in the case in which the fluorinated solution is mixed in a weight ratio of greater than 90, electrodeposition rate of the metal particles on the surfaces of the silicon-based particles may be very high, and thus, uniform and small-sized metal particles may not be electrodeposited on the silicon-based particles.

Also, the amount of the metal particles electrodeposited on the silicon-based particles may be controlled according to a concentration of the fluorinated solution and a contact time of the silicon-based particles with the metal precursor solution. The silicon-based particles may be added in an amount of 0.001 parts by weight to 50 parts by weight based on 100 parts by weight of the mixed solution of the fluorinated solution and the metal precursor solution.

According to an embodiment of the present invention, step (ii) is a step of forming pores on the surfaces or the surfaces and inside of the silicon-based particles by etching the silicon-based particles by contacting the silicon-based particles having metal particles electrodeposited thereon with an etching solution. Nanopores, mesopores, and macropores may be formed through the etching process.

The etching of the silicon-based particles is performed as follows. For example, metal particles become metal ions by being oxidized by H₂O₂, the silicon-based particles are continuously dissolved while transferring electrons to the metal particles at interfaces between the silicon-based particles and the metal particles, and the reduction of the oxidized metal ions occurs at the metal particles electrodeposited on the surfaces of the above-described silicon-based particles. Accordingly, the silicon-based particles in contact with the metal particles may be continuously etched to form a honeycomb-shaped porous structure at least on the surfaces thereof, and a pore size may be controlled according to the resultant product finally etched by controlling the type of metal particles and reaction time.

A mixed solution of a HF solution and a hydrogen peroxide (H₂O₂) solution may be used as the etching solution, and an amount of the HF solution included may vary depending on the degree of etching. However, the HF solution and the H₂O₂ solution may be mixed in a weight ratio of 10:90 to 90:10. In this case, the amount of H₂O₂ plays an important role in the formation of pores in the silicon-based particles.

Also, the etching may be performed for 30 minutes to 24 hours according to the concentration of the etching solution. In the case that the etching is performed less than 30 minutes, the formation of pores may be insignificant. In the case in which the etching is performed greater than 24 hours, the silicon-based particles are excessively etched, and thus, mechanical properties of the active material may be deteriorated.

In the method of preparing a porous silicon-based active material for negative electrode according to the embodiment of the present invention, step (iii) is a step of removing the metal particles by contacting a metal removal solution with the silicon-based particles having the pores formed therein.

The metal removal solution used may include at least one selected from the group consisting of nitric acid (HNO₃), sulfuric acid (H₂SO₄), and hydrochloric acid (HCl).

In the method of preparing porous silicon-based particles according to the embodiment of the present invention, the etching method may form pores without changing the crystal structure of the porous silicon-based particles.

The present invention may also provide a negative electrode including the active material for negative electrode.

Furthermore, the present invention may provide a lithium secondary battery including a positive electrode, the negative electrode, a separator disposed between the positive electrode and the negative electrode, and an electrolyte in which a lithium salt is dissolved.

The active material for negative electrode thus prepared may be used to prepare a negative electrode by a typical method in the art. For example, the active material for negative electrode according to the embodiment of the present invention is mixed with a binder, a solvent, and a conductive agent and a dispersant if necessary, and stirred to prepare a slurry. Then, a current collector may be coated with the slurry and pressed to prepare a negative electrode.

Various types of binder polymers, such as a polyvinylidene fluoride-hexafluoropropylene copolymer (PVDF-co-HEP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, poly acrylic acid, and a polymer having hydrogen thereof substituted with Li, sodium (Na), and Ca, or various copolymers, may be used as the binder. N-methyl pyrrolidone, acetone, or water may be used as the solvent.

Any conductive agent may be used without particular limitation so long as it has suitable conductivity without causing adverse chemical changes in the batteries. For example, the conductive agent may include a conductive material such as: graphite such as natural graphite and artificial graphite; carbon black such as acetylene black, Ketjen black, channel black, furnace black, lamp black, and thermal black; conductive fibers such as carbon fibers and metal fibers; conductive tubes such as carbon nanotubes; fluorocarbon powder; metal powder such as aluminum powder and nickel powder; conductive whiskers such as zinc oxide whiskers and potassium titanate whiskers; conductive metal oxide such as titanium oxide; or polyphenylene derivatives.

An aqueous-based dispersant or an organic dispersant, such as N-methyl-2-pyrrolidone, may be used as the dispersant.

Similar to the preparation of the negative electrode, a positive electrode active material, a conductive agent, a binder, and a solvent are mixed to prepare a slurry, and a positive electrode may then be prepared by directly coating a metal current collector with the slurry or by casting the slurry on a separate support and laminating a positive electrode active material film separated from the support on a metal current collector.

Examples of the positive electrode active material may be a layered compound, such as lithium cobalt oxide (LiCoO₂), lithium nickel oxide (LiNiO₂), Li[NiₓCo_{y}Mn_{z}Mᵥ]O₂ (where M is any one selected from the group consisting of Al, gallium (Ga), and indium (In), or two or more elements thereof; and 0.3≤x<0.1, 0≤y, z≤0.5, 0≤v≤0.1, and x+y+z+v=1), Li(LiₐM_{b-a-b'}M'_{b'})O_{2-c}A_{c} (where 0≤a≤0.2, 0.6≤b≤1, 0≤b'≤0.2, and 0≤c≤0.2; M includes Mn and at least one selected from the group consisting of Ni, Co, Fe, Cr, V, Cu, Zn, and Ti; M' is at least one selected from the group consisting of Al, Mg, and B; and A is at least one selected from the group consisting of P, fluorine (F), sulfur (S), and nitrogen (N)), or a compound substituted with at least one transition metal; lithium manganese oxides such as the chemical formula Li_{1+y}Mn_{2-y}O₄ (where y ranges from 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni-site type lithium nickel oxide represented by the chemical formula LiNi_{1-y}M_{y}O₂ (where M is Co, Mn, Al, Cu, Fe, Mg, B, or Ga, and y ranges from 0.01 to 0.3); lithium manganese complex oxide represented by the chemical formula LiMn_{2-y}M_{y}O₂ (where M is Co, Ni, Fe, Cr, Zn, or Ta, and y ranges from 0.01 to 0.1) or Li₂Mn₃MO₈ (where M is Fe, Co, Ni, Cu, or Zn) ; LiMn₂O₄ having a part of Li being substituted with alkaline earth metal ions; a disulfide compound; and Fe₂(MoO₄)₃. However, the positive electrode active material is not limited thereto.

A typical porous polymer film used as a typical separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers, and a polymer separator base material having at least one surface thereof coated with ceramic may be used. However, the present invention is not limited thereto.

In an electrolyte solution used in an embodiment of the present invention, a lithium salt, which may be included as the electrolyte, may be used without limitation so long as it is typically used in an electrolyte solution for a secondary battery. For example, one selected from the group consisting of F⁻, Cl⁻, I⁻, NO⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃ (CF₂)₇SO₃⁻, CF₃CO₂⁻, CH₃CO₂⁻, SCN⁻, and (CF₃CF₂SO₂)₂N⁻ may be used as an anion of the lithium salt.

In the electrolyte solution used in an embodiment of the present invention, an organic solvent included in the electrolyte solution may be used without limitation so long as it is typically used in the art. Typically, any one selected from the group consisting of propylene carbonate, ethylene carbonate, diethyl carbonate, dimethyl carbonate, ethylmethyl carbonate, methylpropyl carbonate, dipropyl carbonate, fluoro-ethylene carbonate, dimethyl sulfoxide, acetonitrile, dimethoxyethane, diethoxyethane, vinylene carbonate, sulfolane, γ-butyrolactone, propylene sulfite, tetrahydrofuran, methyl formate, methyl acetate, ethyl acetate, isopropyl acetate, isoamyl acetate, methyl propionate, ethyl propionate, propyl propionate, butyl propionate, methyl butylate, and ethyl butylate, or a mixture of two or more thereof may be used.

In particular, ethylene carbonate and propylene carbonate, ring-type carbonates among the carbonate-based organic solvents, well dissociate the lithium salt in the electrolyte due to high dielectric constants as high-viscosity organic solvents, and thus, the ring-type carbonate may be used. Since an electrolyte having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate, for example, may be used.

Selectively, the electrolyte stored according to the present invention may further include an additive, such as an overcharge inhibitor, that is included in a typical electrolyte.

A separator is disposed between the positive electrode and the negative electrode to form an electrode assembly, the electrode assembly is put in a cylindrical battery case or prismatic battery case or aluminum pouch, and a secondary battery is then completed when the electrolyte is injected thereinto. Also, the electrode assembly is stacked and impregnated with the electrolyte solution, and a lithium secondary battery is then completed when the product thus obtained is put in a battery case and sealed.

The lithium secondary battery according to the present invention may not only be used in a battery cell that is used as a power source of a small device, but may also be used as a unit cell in a medium and large sized battery module including a plurality of battery cells. Preferred examples of the medium and large sized device may be an electric vehicle, a hybrid electric vehicle, a plug-in hybrid electric vehicle, or a power storage system, but the medium and large sized device is not limited thereto.

### Reference Example 1

Porous silicon (Si) particles (a) having an average particle diameter (D₅₀) of 5 µm and a specific surface area (BET-SSA) of 18 m²/g; and graphite particles (b), in which coarse graphite particles having an average particle diameter (D₅₀) of 20 µm and fine graphite particles having an average particle diameter (D₅₀) of 3 µm were mixed at a weight ratio of 80:20, were mixed to prepare an active material for negative electrode. In this case, a mixing ratio of the Si particles (a) to the graphite particles (b) was 5:95 as a weight ratio.

### Comparative Example 1

An active material for negative electrode was prepared in the same manner as in Reference Example 1 except that coarse graphite particles having an average particle diameter (D₅₀) of 20 µm were only used as the graphite particles (b).

### Comparative Example 2

An active material for negative electrode was prepared in the same manner as in Reference Example 1 except that non-porous Si particles were used instead of porous Si particles.

### Comparative Example 3

An active material for negative electrode was prepared in the same manner as in Comparative Example 1 except that non-porous Si particles were used instead of porous Si particles.

### <Preparation of Coin-type Half Cell>

### Reference Example 2

The active material for negative electrode prepared in Reference Example 1, acetylene black as a conductive agent, and polyvinylidene fluoride as a binder were mixed at a weight ratio of 95:1:4 and the mixture was mixed with a N-methyl-2-pyrrolidone solvent to prepare a slurry. One surface of a copper current collector was coated with the prepared slurry to a thickness of 30 µm, dried and rolled. Then, a negative electrode was prepared by punching into a predetermined size.

A non-aqueous electrolyte solution was prepared by adding 10 wt% of fluoroethylene carbonate based on a total amount of the electrolyte solution to a mixed solvent including 1.0 M LiPF₆ and an organic solvent which was prepared by mixing ethylene carbonate and diethyl carbonate at a weight ratio of 30:70.

A lithium foil was used as a counter electrode, a polyolefin separator was disposed between both electrodes, and a coin-type half-cell was then prepared by injecting the electrolyte solution.

### Comparative Examples 4 to 6

Coin-type half cells were prepared in the same manner as in Reference Example 2 except that the active material for negative electrodes prepared in Comparative Examples 1 to 3 were respectively used as active material for negative electrodes instead of using the active material for negative electrode prepared in Reference Example 1.

### Experimental Example 1: Lifetime Characteristics and Capacity Characteristics Analysis

In order to investigate capacity characteristics and lifetime characteristics of the coin-type half cells prepared in Reference Example 2 and Comparative Examples 4 to 6 according to charge and discharge cycles, the coin-type half cells prepared in Reference Example 2 and Comparative Examples 4 to 6 were charged at 0.1 C to a voltage of 5 mV and a current of 0.005 C under constant current/constant voltage (CC/CV) conditions at 23°C, and then discharged at 0.1 C to a voltage of 1.5 V under a constant current (CC) condition to measure capacities.

Thereafter, the coin-type half cells were charged at 0.5 C to a voltage of 5 mV and a current of 0.005 C under constant current/constant voltage (CC/CV) conditions, and then discharged at 0.5 C to a voltage of 1.0 V under a constant current (CC) condition. This charge and discharge cycle was repeated 1 to 50 times. The results thereof are presented in Table 1 below.

**[Table 1]**

| Examples | Capacity (mAh/g) | Lifetime characteristics (%) |
|---|---|---|
| Reference Example 2 | 480.1 | 82 |
| Comparative Example 4 | 483.5 | 77 |
| Comparative Example 5 | 485.7 | 76 |
| Comparative Example 6 | 481.5 | 73 |

| | | |
|---|---|---|
| - Lifetime characteristics: (discharge capacity in a 49th cycle/ discharge capacity in the first cycle) x 100 | | |

As illustrated in Table 1, it may be confirmed that the lifetime characteristics of the secondary battery of Reference Example 2 using the active material for negative electrode, in which porous silicon particles and carbon particles including fine and coarse carbon particles respectively having different average particle diameters were mixed, were improved by about 5% in comparison to Comparative Example 4 in which porous silicon particles were mixed with carbon particles only including coarse carbon particles.

In contrast, it may be confirmed that the lifetime characteristics of the secondary battery of Comparative Example 5 using the active material for negative electrode, in which non-porous Si particles and carbon particles including fine and coarse carbon particles respectively having different average particle diameters were mixed, were improved by about 3% in comparison to Comparative Example 6 using the active material for negative electrode which includes non-porous Si particles and carbon particles only including coarse carbon particles.

Also, it may be confirmed that the lifetime characteristics of the secondary battery of Reference Example 2 of the present invention were improved by about 6% to about 9% in comparison to Comparative Examples 5 and 6 using the active material for negative electrode in which non-porous Si particles, instead of porous Si particles, were used and mixed with carbon particles.

That is, it may be understood that an effect due to the mixing of fine graphite and coarse graphite was increased when porous Si particles were used instead of using non-porous Si particles.

Also, in the case that fine and coarse carbon particles respectively having different average particle diameters were mixed together, it may be confirmed that the lifetime characteristics were significantly better than the case of using single carbon particles.

With respect to capacity characteristics, the capacity characteristics of the secondary battery of Reference Example 2 tended to slightly decrease in comparison to those of the comparative example, but the above value was within the error range. Thus, the capacity characteristics were not affected when the active material for negative electrode of the present invention was used in the secondary battery.

Therefore, the active material for negative electrode of the present invention having excellent lifetime characteristics is suitable for a secondary battery.

### [Description of the Symbols]

110: Silicon-based particle
120: Carbon particle
210: Porous silicon-based particle
220: Coarse carbon particle
230: Fine carbon particle

## Claims

1. An active material for negative electrode comprising:
porous silicon-based particles; and
carbon particles,
wherein the carbon particles comprise fine carbon particles and coarse carbon particles respectively having different average particle diameters,
wherein an average particle diameter D50 of the fine carbon particles is in a range of 1 µm to 5 µm as determined by laser diffraction,
wherein an average particle diameter D50 of the coarse carbon particles is in a range of 10 µm to 30 µm as determined by laser diffraction, and
wherein the coarse carbon particles are spherical in shape.

2. The active material for negative electrode of claim 1, wherein a mixing ratio of the porous silicon-based particles to the carbon particles is in a range of 1:1 to 1:20 as a weight ratio.

3. The active material for negative electrode of claim 1, wherein the fine carbon particles are included in an amount of 1 wt% to 30 wt% based on a total weight of the carbon particles.

4. The active material for negative electrode of claim 3, wherein a mixing ratio of the fine carbon particles to the coarse carbon particles is in a range of 1:4 to 1:9 as a weight ratio.

5. The active material for negative electrode of claim 1, wherein an average particle diameter D50 of the porous silicon-based particles is in a range of 1 µm to 20 µm as determined by laser diffraction.

6. The active material for negative electrode of claim 1, wherein an average pore diameter of the porous silicon-based particles is in a range of 30 nm to 500 nm as measured using scanning electron microscope images.

7. The active material for negative electrode of claim 1, wherein a BET specific surface area of the porous silicon-based particles is in a range of 5 m²/g to 50 m²/g as determined by 6-point BET method according to a nitrogen gas adsorption-flow method using a porosimetry analyzer.

8. The active material for negative electrode of claim 1, wherein the porous silicon-based particles comprise porous SiOₓ where 0≤x<2.

9. The active material for negative electrode of claim 8, wherein the porous silicon-based particles are porous silicon particles.

10. The active material for negative electrode of claim 1, wherein a shape of the fine carbon particles is spherical, rectangular, scaly, planar, point-like, or a mixed shape thereof.

11. The active material for negative electrode of claim 1, wherein the carbon particles comprise any one selected from the group consisting of artificial graphite, natural graphite, mesocarbon, amorphous hard carbon, low-crystalline soft carbon, carbon black, acetylene black, Ketjen black, super P, graphene, and surface-coated graphite, or a mixture of two or more thereof.

12. A negative electrode comprising the active material for negative electrode of claim 1.

13. A lithium secondary battery comprising the negative electrode of claim 12.

## Patentansprüche

1. Aktivmaterial für eine negative Elektrode, umfassend:
poröse Silicium-basierte Partikel und
Kohlenstoffpartikel,
wobei die Kohlenstoffpartikel feine Kohlenstoffpartikel und grobe Kohlenstoffpartikel mit jeweils unterschiedlichen durchschnittlichen Partikeldurchmessern umfassen,
wobei ein durchschnittlicher Partikeldurchmesser D50 der feinen Kohlenstoffpartikel in einem Bereich von 1 µm bis 5 µm, bestimmt durch Laserbeugung, liegt,
wobei ein durchschnittlicher Partikeldurchmesser D50 der groben Kohlenstoffpartikel in einem Bereich von 10 µm bis 30 µm, bestimmt durch Laserbeugung, liegt und
wobei die groben Kohlenstoffpartikel der Form nach kugelförmig sind.

2. Aktivmaterial für eine negative Elektrode gemäß Anspruch 1, wobei ein Mischverhältnis der porösen Silicium-basierten Partikel zu den Kohlenstoffpartikeln in einem Bereich von 1:1 bis 1:20 als Gewichtsverhältnis liegt.

3. Aktivmaterial für eine negative Elektrode gemäß Anspruch 1, wobei die feinen Kohlenstoffpartikel in einer Menge von 1 Gew.-% bis 30 Gew.-%, bezogen auf ein Gesamtgeweicht der Kohlenstoffpartikel, enthalten sind.

4. Aktivmaterial für eine negative Elektrode gemäß Anspruch 3, wobei das Mischverhältnis der feinen Kohlenstoffpartikeln zu den groben Kohlenstoffpartikeln in einem Bereich von 1:4 bis 1:9 als Gewichtsverhältnis liegt.

5. Aktivmaterial für eine negative Elektrode gemäß Anspruch 1, wobei ein durchschnittlicher Partikeldurchmesser D50 der porösen Silicium-basierten Partikel in einem Bereich von 1 µm bis 20 µm, bestimmt durch Laserbeugung, liegt.

6. Aktivmaterial für eine negative Elektrode gemäß Anspruch 1, wobei ein durchschnittlicher Porendurchmesser der porösen Silicium-basierten Partikel in einem Bereich von 30 nm bis 500 nm, gemessen unter Verwendung von Rasterelektronenmikroskopaufnahmen, liegt.

7. Aktivmaterial für eine negative Elektrode gemäß Anspruch 1, wobei eine spezifische BET-Oberfläche der porösen Silicium-basierten Partikel in einem Bereich von 5 m²/g bis 50 m²/g, bestimmt durch die 6-Punkt-BET-Methode gemäß einer Stickstoffgasadsorptions-Flow-Methode unter Verwendung eines Porosimetrie-Analysegeräts, liegt.

8. Aktivmaterial für eine negative Elektrode gemäß Anspruch 1, wobei die porösen Silicium-basierten Partikel poröses SiOₓ umfassen, worin 0≤x>2 ist.

9. Aktivmaterial für eine negative Elektrode gemäß Anspruch 8, wobei die porösen Silicium-basierten Partikel poröse Siliciumpartikel sind.

10. Aktivmaterial für eine negative Elektrode gemäß Anspruch 1, wobei eine Form der feinen Kohlenstoffpartikel kugelförmig, rechteckig, schuppenförmig, flach, punktartig oder eine Mischform davon ist.

11. Aktivmaterial für eine negative Elektrode gemäß Anspruch 1, wobei die Kohlenstoffpartikel irgendeines, ausgewählt aus der Gruppe, bestehend aus künstlichem Graphit, natürlichem Graphit, Mesocarbon, amorphem Hard Carbon, niedrig-kristallinem Soft Carbon, Industrieruß, Acetylenruß, Ketjen-Black, Super P, Graphen und oberflächenbeschichtetem Graphit, oder eine Mischung von zwei oder mehreren davon umfassen.

12. Negative Elektrode, umfassend das Aktivmaterial für eine negative Elektrode gemäß Anspruch 1.

13. Lithiumsekundärbatterie, umfassend die negative Elektrode gemäß Anspruch 12.

## Revendications

1. Matériau actif pour électrode négative comprenant :
des particules à base de silicium poreux ; et
des particules de carbone,
dans lequel les particules de carbone comprennent des particules de carbone fines et des particules de carbone grossières ayant respectivement des diamètres de particules moyens différents,
dans lequel un diamètre de particule moyen D50 des particules de carbone fines se situe dans une plage de 1 µm à 5 µm tel que déterminé par diffraction laser,
dans lequel un diamètre de particule moyen D50 des particules de carbone grossières se situe dans une plage de 10 µm à 30 µm tel que déterminé par diffraction laser, et
dans lequel les particules de carbone grossières sont de forme sphérique.

2. Matériau actif pour électrode négative selon la revendication 1, dans lequel un rapport de mélange des particules à base de silicium poreux aux particules de carbone se situe dans une plage de 1 : 1 à 1 : 20 en rapport en poids.

3. Matériau actif pour électrode négative selon la revendication 1, dans lequel les particules de carbone fines sont incluses en une quantité de 1 % en poids à 30% en poids sur la base d'un poids total des particules de carbone.

4. Matériau actif pour électrode négative selon la revendication 3, dans lequel un rapport de mélange des particules de carbone fines aux particules de carbone grossières se situe dans une plage de 1 : 4 à 1 : 9 en rapport en poids.

5. Matériau actif pour électrode négative selon la revendication 1, dans lequel un diamètre de particule moyen D50 des particules à base de silicium poreux se situe dans une plage de 1 µm à 20 µm tel que déterminé par diffraction laser.

6. Matériau actif pour électrode négative selon la revendication 1, dans lequel un diamètre de pore moyen des particules à base de silicium poreux se situe dans une plage de 30 nm à 500 nm tel que mesuré en utilisant des images au microscope électronique à balayage.

7. Matériau actif pour électrode négative selon la revendication 1, dans lequel une superficie spécifique BET des particules à base de silicium poreux se situe dans une plage de 5 m²/g à 50 m²/g telle que déterminée par un procédé BET à 6 points selon un procédé de flux d'adsorption d'azote gazeux utilisant un analyseur de porosimétrie.

8. Matériau actif pour électrode négative selon la revendication 1, dans lequel les particules à base de silicium poreux comprennent du SiOₓ poreux où 0 ≤ x < 2.

9. Matériau actif pour électrode négative selon la revendication 8, dans lequel les particules à base de silicium poreux sont des particules de silicium poreux.

10. Matériau actif pour électrode négative selon la revendication 1, dans lequel une forme des particules de carbone fines est sphérique, rectangulaire, écailleuse, plane, ponctuelle, ou une forme mixte de celles-ci.

11. Matériau actif pour électrode négative selon la revendication 1, dans lequel les particules de carbone comprennent l'une quelconque sélectionnée à partir du groupe constitué par du graphite artificiel, du graphite naturel, du mésocarbone, du carbone dur amorphe, du carbone doux faiblement cristallin, du noir de carbone, du noir d'acétylène, du noir de Ketjen, du super P, du graphène, et du graphite à finition de surface, ou un mélange de deux ou plus de ceux-ci.

12. Électrode négative comprenant le matériau actif pour électrode négative selon la revendication 1.

13. Batterie rechargeable au lithium comprenant l'électrode négative selon la revendication 12.
